# EUROPÄISCHE PATENTSCHRIFT

(11) **EP 2 552 695 B1**
(45) Veröffentlichungstag und Bekanntmachung des Hinweises auf die Patenterteilung: **10.08.2016**
(21) Anmeldenummer: 11790962.2
(22) Anmeldetag: 30.11.2011
(51) Int. Cl.: B41F 13/28, F16C 13/00, F16C 13/02, F16C 23/10

(54) **VORRICHTUNG UND VERFAHREN ZUM AXIALEN FESTSTELLEN EINES ZWISCHEN GEGENÜBERSTEHENDEN GESTELLWÄNDEN ANGEORDNETEN ROTATIONSKÖRPERS**
DEVICE AND METHOD FOR AXIALLY FIXING A ROTATIONAL SOLID BETWEEN OPPOSITE FRAME WALLS
DISPOSITIF ET PROCÉDÉ PERMETTANT D'IMMOBILISER AXIALEMENT UN CORPS ROTATIF AGENCÉ ENTRE DES PAROIS DE BÂTI OPPOSÉES

(30) Priorität: 02.03.2011 DE 102011004979
(43) Veröffentlichungstag der Anmeldung: 06.02.2013
(73) Patentinhaber: Koenig & Bauer AG, 97080 Würzburg (DE)
(72) Erfinder: OTT, Franz-Josef, 97273 Kürnach (DE); LIEBLER, Manfred, Herrmann, 97837 Erlenbach (DE)
(74) Vertreter: Koenig & Bauer AG
(86) Internationale Anmeldenummer: PCT/EP2011/071381
(87) Internationale Veröffentlichungsnummer: WO 2012/116766

(56) Entgegenhaltungen:
- EP-A1- 0 597 153
- DE-A1-102008 000 204

## Beschreibung

Die Erfindung betrifft eine Vorrichtung zum axialen Feststellen eines zwischen gegenüberstehenden Gestellwänden angeordneten Rotationskörpers gemäß Anspruch 1 und ein zugehöriges Verfahren gemäß Anspruch 12.

Durch die DE 10 2008 000 204 A1 ist eine Lagerung für einen Zylinder einer Rotationsdruckmaschine bekannt, wobei ein erster Lagerring in einer Bohrung eines Seitengestells der Rotationsdruckmaschine vorzugsweise spielfrei, z. B. eingepresst angeordnet ist, wobei der erste Lagerring zur axialen Abbindung einen Kragen aufweist und mittels Schrauben oder Klemmung (z. B. Pratzen) zur Sicherung gegenüber einer axialen Verschiebung am Seitengestell angeordnet ist.

Durch die DD 297 212 A5 ist eine Anordnung zur justierbaren Lagerung einer Stützrolle bekannt, wobei gelagerte Rollen einen Schlitten justieren und durch ein Anstellen der Rollen an Schienen des Schlittens eine spielfreie Lagerung erzeugen.

Der Erfindung liegt die Aufgabe zugrunde, eine Vorrichtung und ein Verfahren zum axialen Feststellen eines zwischen gegenüberstehenden Gestellwänden angeordneten Rotationskörpers zu schaffen.

Die Aufgabe wird erfindungsgemäß durch die Merkmale des Anspruches 1 bzw. 12 gelöst.

Die mit der Erfindung erzielbaren Vorteile bestehen insbesondere darin, dass ein beidendig jeweils in einem Loslager drehbeweglich gelagerter Rotationskörper axial spielfrei gestellt wird oder zumindest stellbar ist. In einer bevorzugten Ausführung der Erfindung ist der axial beweglich gelagerte Rotationskörper mittels der Vorrichtung zum axialen Feststellen dieses Rotationskörpers auch in seiner axialen Position eingestellt oder zumindest einstellbar.

Die gemäß DE 10 2008 000 204 A1 am Seitengestell zu verwendenden Pratzen zur Sicherung des Rotationskörpers gegenüber seiner axialen Verschiebung werden erfindungsgemäß durch eine Einstellung eines Drehwinkels exzentrisch gelagerter Rollen ersetzt, wodurch bei einer Montage einer Rotationsdruckmaschine die axiale Feststellung und gegebenenfalls auch die axiale Positionierung eines zwischen gegenüberstehenden Gestellwänden angeordneten Rotationskörpers erheblich vereinfacht wird.

Ausführungsbeispiele der Erfindung sind in den Zeichnungen dargestellt und werden im Folgenden näher beschrieben.

Es zeigen:
- Fig. 1: eine schematische Darstellung eines in einer Rotationsdruckmaschine angeordneten Rotationskörpers;
- Fig. 2: eine Schnittdarstellung einer Vorrichtung zum axialen Feststellen des Rotationskörpers;
- Fig. 3: eine Darstellung eines an einem Zapfen des Rotationskörpers angeordneten Halters;
- Fig. 4: die Vorrichtung zum axialen Feststellen des Rotationskörpers in Verbindung mit einem zu einer Gestellwand der Rotationsdruckmaschine gehörenden Montageelement;
- Fig. 5: die Vorrichtung zum axialen Feststellen des Rotationskörpers in Verbindung mit dem Montageelement in einer perspektivischen Darstellung;
- Fig. 6: eine perspektivische Darstellung der Vorrichtung zum axialen Feststellen des zwischen gegenüberstehenden Gestellwänden angeordneten Rotationskörpers;
- Fig. 7: einen Teilausschnitt der Vorrichtung zum axialen Feststellen des Rotationskörpers mit drehbar gelagerten Rollen.

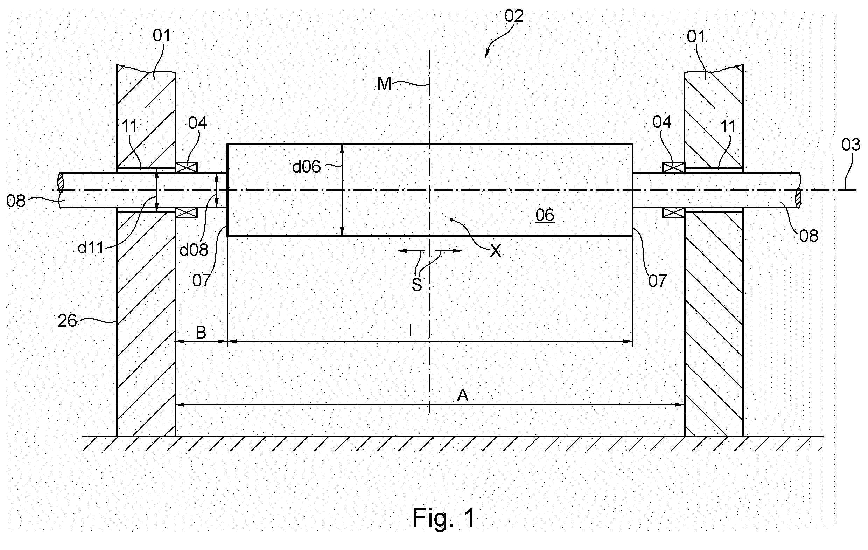

Wie in der Fig. 1 vereinfacht schematisch dargestellt, weist eine z. B. im Zeitungsdruck oder im Akzidenzdruck verwendete Rotationsdruckmaschine auf einem Fundament ein Gestell mit zwei sich in einem Abstand A gegenüberstehenden vertikalen Gestellwänden 01 auf, wobei zwischen diesen Gestellwänden 01 in einer horizontalen Positionierung mindestens ein Rotationskörper 02, z. B. eine Walze oder ein Zylinder, vorzugsweise ein Druckwerkszylinder, insbesondere ein Übertragungszylinder oder ein Formzylinder, drehbar gelagert ist. In vielen Fällen ist der Rotationskörper 02 auch längs seiner Drehachse 03 zwischen den ihn haltenden Gestellwänden 01 beweglich, insbesondere verschiebbar angeordnet, damit eine mit diesem Rotationskörper 02 fest verbundene Position X entlang der Drehachse 03 z. B. relativ zu einem anderen (nicht dargestellten) Rotationskörper insbesondere dieser Rotationsdruckmaschine oder relativ zu einem gestellfesten Bezugspunkt einstellbar ist und auch eingestellt wird, wobei für diese axiale Beweglichkeit ein Stellweg S im Bereich von einigen Millimetern, z. B. bis zu ±10 mm vorgesehen sein kann. Als Bezugspunkt für die axiale Einstellung der mit dem Rotationskörper 02 fest verbundenen Position X kann z. B. eine Mittenposition M des Abstandes A zwischen den beiden gegenüberstehenden Gestellwänden 01 oder eine Position auf oder an einem anderen (nicht dargestellten) Rotationskörper derselben Rotationsdruckmaschine gewählt sein. Der Abstand A wird auch als eine lichte Weite zwischen den sich gegenüberstehenden Gestellwänden 01 bezeichnet, wobei dieser Abstand A z. B. im Bereich zwischen 500 mm und 3.000 mm liegt.

Es wird nachfolgend davon ausgegangen, dass an beiden Enden des betreffenden Rotationskörpers 02 zumindest jeweils mindestens ein Drehlager 04, auch Radiallager 04 genannt, vorgesehen ist. Das jeweilige Radiallager 04 ist jeweils z. B. als ein Loslager ausgebildet und lässt damit außer einer Rotation dieses Rotationskörpers 02 gleichzeitig auch eine Translation des betreffenden Rotationskörpers 02 entlang von dessen Drehachse 03 zumindest innerhalb festgesetzter Grenzen zu. In einer alternativen Ausgestaltung können die Radiallagerung und die Axiallagerung des betreffenden Rotationskörpers 02 auch voneinander getrennt, d. h. als jeweils separate Maschinenelemente ausgebildet sein. Um den zwischen zwei gegenüberstehenden Gestellwänden 01 angeordneten Rotationskörper 02 in seiner axialen Position zu fixieren, ist eine mit dem betreffenden Rotationskörper 02 verbundene oder zumindest verbindbare Vorrichtung zum axialen Feststellen dieses Rotationskörper 02 vorgesehen. Der z. B. in einer schnell laufenden Rotationsdruckmaschine angeordnete Rotationskörper 02 kann insbesondere in seiner Ausgestaltung als ein Druckwerkszylinder angetrieben von einem vorzugsweise elektromotorischen Antrieb z. B. in einem Druckbetrieb dieser Rotationsdruckmaschine mit einer Drehzahl z. B. von mehreren 10.000 Umdrehungen/Stunde um seine Drehachse 03 rotieren.

In seiner bevorzugten Ausgestaltung weist der Rotationskörper 02 an seinen beiden Enden, d. h. an der jeweiligen Stirnseite 07 seines eine Länge I aufweisenden Ballens 06 jeweils einen Zapfen 08 auf, wobei der jeweilige Durchmesser d08 der Zapfen 08 im Vergleich zum Durchmesser d06 des Balles 06 jeweils kleiner ist. Die Länge I des Ballens 06 liegt z. B. im Bereich zwischen 500 mm und 3.000 mm, wobei die Länge I des Ballens 06 natürlich geringer ist als der Abstand A zwischen den sich gegenüberstehenden Gestellwänden 01. Jeder der beiden Zapfen 08 ist z. B. mittels der Radiallager 04 entweder in oder an einer der Gestellwände 01 gelagert. Beide Zapfen 08 können jeweils eine in der betreffenden Gestellwand 01 ausgebildete, vorzugsweise kreisrunde Öffnung 11, insbesondere Bohrung, durchragen oder zumindest in diese Öffnung 11 hineinragen. Beide Zapfen 08 sind jeweils in einem vorzugsweise als ein Loslager ausgebildeten Radiallager 04 drehbar gelagert, wobei die Radiallager 04 eine Translation dieses Rotationskörpers 02 zum Zwecke von dessen axialer Positionierung vorzugsweise zulassen, d. h. die Einstellung der mit dem Rotationskörper 02 fest verbundenen Position X relativ zu einem von diesem Rotationskörper 02 getrennten Bezugspunkt. In Verbindung mit der axialen Positionierung dieses Rotationskörpers 02 entlang des Stellweges S wird auch ein Abstand B zwischen einer der Stirnseiten 07 des Ballens 06 des betreffenden Rotationskörpers 02 und der dieser Stirnseite 07 zugewandten Gestellwand 01 eingestellt.

Die jeweils einen der Zapfen 08 lagernden Radiallager 04 sind jeweils vorzugsweise als ein Wälzlager ausgebildet, bei welchem sich die relativ zueinander bewegten Teile über Wälzkörper aufeinander stützen. Zur Ausbildung eines Festlagers an einem der beiden axialen Enden des Rotationskörpers 02 ist der an dem festzustellenden Ende dieses Rotationskörpers 02 angeordnete Zapfen 08 mit einer Vorrichtung zum axialen Feststellen dieses Rotationskörpers 02 verbunden. Der Rotationskörper 02 wird vorzugsweise zu demjenigen Zeitpunkt axial festgestellt, insbesondere spielfrei festgestellt, nachdem die axiale Positionierung dieses Rotationskörpers 02 zwischen den beiden ihn halternden Gestellwänden 01 erfolgt ist.

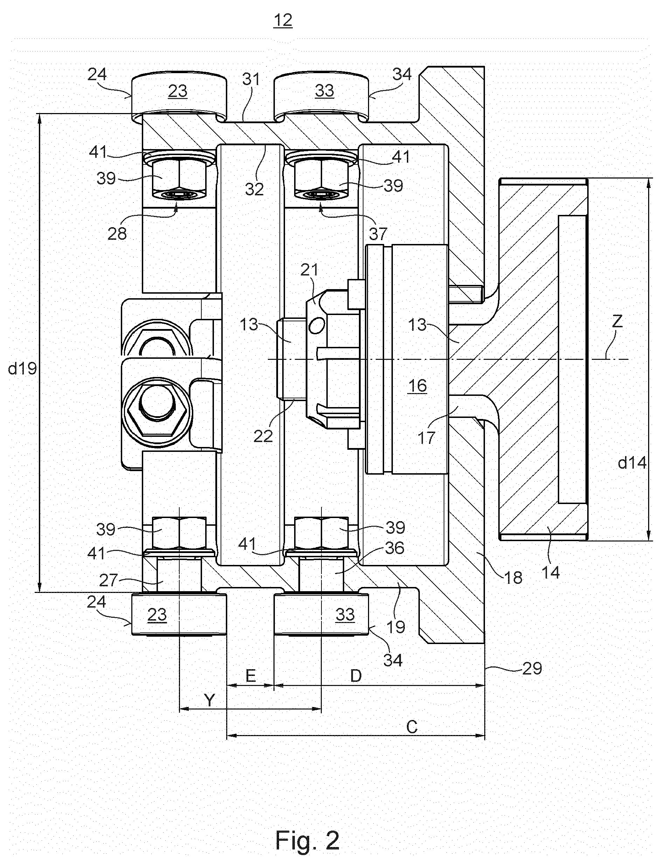

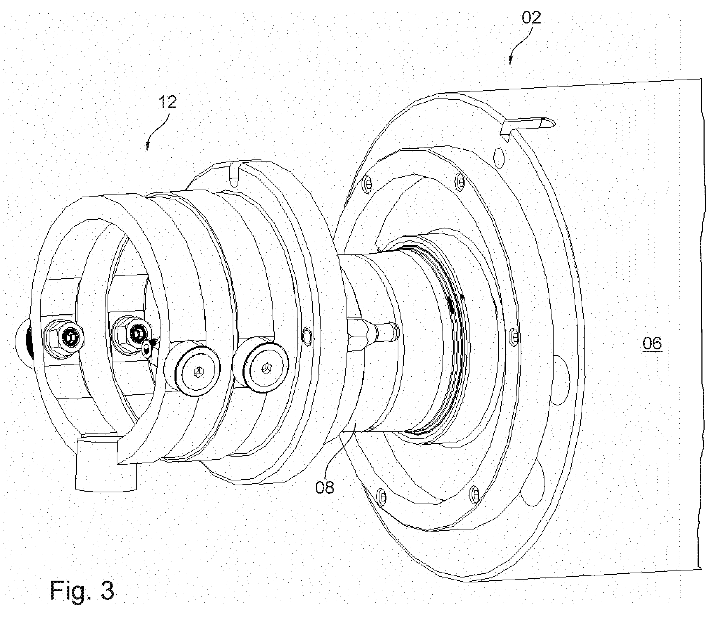

Die Vorrichtung zum axialen Feststellen dieses Rotationskörpers 02 ist beispielhaft in der Fig. 2 in einer Schnittzeichnung dargestellt. Diese Vorrichtung weist einen Halter 12 mit einem z. B. im Wesentlichen zylindrischen, topfförmigen Gehäuse 19 auf, wobei das Gehäuse 19 an einer seiner beiden gegenüberliegenden Stirnseiten einen Boden 18 aufweist. Die dem Boden 18 gegenüberliegende Stirnseite ist vorzugsweise vollständig geöffnet oder kann zumindest geöffnet werden, um einen Zugang zum Inneren des Halters 12 zu ermöglichen. In einem den Boden 18 des Halters 12 orthogonal durchstoßenden Zentrum Z ist eine Welle 13 drehbar gelagert. Das die Welle 13 lagernde Zentrum Z ist mit Bezug auf das z. B. zylindrische Gehäuse 19 des Halters 12 z. B. außermittig angeordnet. Die Welle 13 weist ihrerseits an einem ihrer Enden z. B. einen Flansch 14 auf, d. h. eine ringförmige Verbreiterung, wobei dieser Flansch 14 insbesondere mit einem Zapfen 08 des zwischen den beiden gegenüberstehenden Gestellwänden 01 angeordneten Rotationskörpers 02 verbunden oder zumindest verbindbar ist. Ein Durchmesser d14 des Flansches 14 entspricht z. B. dem Durchmesser d08 des betreffenden Zapfens 08. Ein Durchmesser d19 des Gehäuses 19 des Halters 12 ist z. B. größer als der Durchmesser d08 des betreffenden Zapfens 08. Der Durchmesser d19 des Gehäuses 19 des Halters 12 ist insbesondere geringer als ein Durchmesser d11 der in der Gestellwand 01 ausgebildeten Öffnung 11 (Fig. 1). Die Verbindung zwischen dem Flansch 14 der Welle 13 und dem Zapfen 08 des Rotationskörpers 02 ist vorzugsweise als eine lösbare Verbindung ausgebildet, z. B. als eine Schraubverbindung. Die Welle 13 ist in einem im oder am Halter 12 angeordneten Axiallager 16, z. B. in einem Axial-Rillenkugellager oder in einem entsprechend wirkenden Schrägkugellager gelagert, wobei dieses Axiallager 16 mit einer seiner Stirnseiten vorzugsweise am Boden 18 des Halters 12 anliegt. Die Welle 13 endet mit ihrem einen Ende im Inneren des Halters 12, wohingegen an dem anderen Ende der Welle 13 ihr Flansch 14 ausgebildet ist. Die Welle 13 durchragt eine vorzugsweise kreisrunde Öffnung 17 im Boden 18 des Halters 12, so dass sich der Flansch 14 der Welle 13 außerhalb des Halters 12 in einer zum Boden 18 des Halters 12 parallelen Ausrichtung befindet. An dem sich im Inneren des Halters 12 befindenden Ende der Welle 13 ist mindestens ein gegen das Axiallager 16 angestelltes Spannelement 21 angeordnet, z. B. ist auf einem an diesem Ende der Welle 13 ausgebildeten Schraubgewinde 22 eine Wellenmutter angeordnet, so dass das im Inneren des Halters 12 angeordnete Axiallager 16 durch eine vom Spannelement 21 erzeugte, in Axialrichtung der Welle 13 wirkende Spannkraft zwischen dem Boden 18 des Halters 12 und der Wellenmutter eingespannt ist. Das Axiallager 16 ist vorzugsweise vorgespannt und spielfrei ausgebildet. Der Halter 12 ist an derjenigen der beiden sich gegenüberstehenden Gestellwände 01 mit Bezug auf die betreffende Gestellwand 01 drehfest angeordnet, an welcher Gestellwand 01 der Rotationskörper 02 axial festzustellen ist. Einen am Zapfen 08 des Rotationskörpers 02 angeordneten Halter 12 zeigt die Fig. 3 in einer perspektivischen Darstellung.

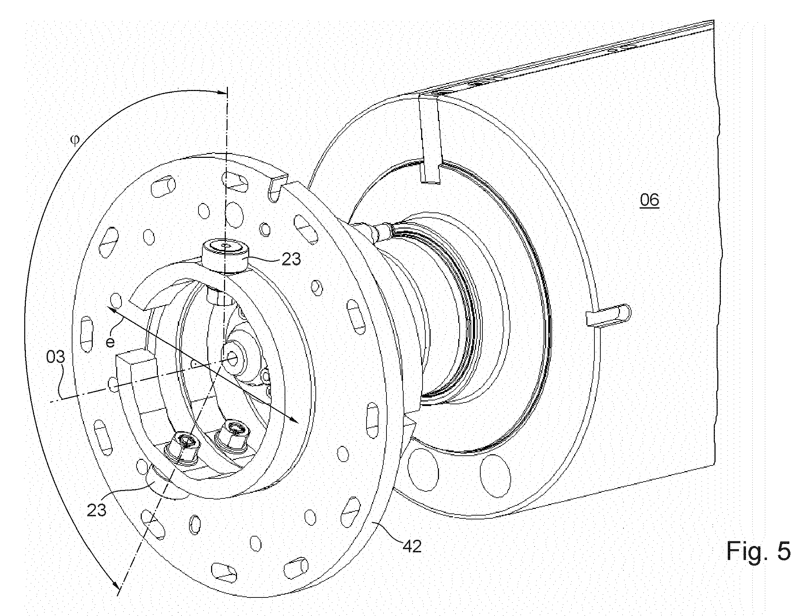

Entlang einer am Gehäuse 19 des Halters 12 verlaufenden ersten Umfangslinie sind an einer äußeren Wandung 31 dieses Gehäuses 19 vorzugsweise anliegend jeweils in einem Winkelversatz ϕ mehrere, z. B. zwei Rollen 23 angeordnet, wobei eine Mantelfläche 24 dieser Rollen 23 jeweils parallel zu einer vertikal stehenden Außenwand 26 von einer der Gestellwände 01 angeordnet oder zumindest anordenbar ist (Fig. 1). In einer bevorzugten Ausgestaltung ist der Rotationskörper 02 in einer lotrecht zu seiner Drehachse 03 stehenden Ebene um einen in der Fig. 5 durch einen Doppelpfeil angedeuteten Stellweg e bewegbar angeordnet. Der zwischen den beiden sich gegenüberstehenden Gestellwänden 01 angeordnete Rotationskörper 02 ist zumindest an seinem von dem betreffenden Halter 12 gehaltenen Ende in der lotrecht zur Drehachse 03 stehenden Ebene ausgehend von einer Normalbetriebsstellung insbesondere um den (in der Fig. 5 nicht maßstabsgerecht dargestellten) Stellweg e bewegbar, insbesondere schwenkbar angeordnet und damit in eine Sonderbetriebsstellung bringbar. Da der Halter 12 mit dem Rotationskörper 02 vorzugsweise in der zuvor beschriebenen Weise verbunden ist, muss der Halter 12 die sich zwischen der Normalbetriebsstellung und der Sonderbetriebsstellung vollziehende Stellbewegung des Rotationskörpers 02 mit ausführen können, und zwar vorzugsweise ohne Ausbildung eines Kippmomentes. Zur kippmomentenfreien Anordnung der Rollen 23 sind die z. B. zwei an der ersten Umfangslinie der äußeren Wandung 31 des Gehäuses 19 angeordneten Rollen 23 nicht diametral zueinander angeordnet, d. h. nicht in einer 180°-Stellung, sondern davon abweichend relativ zueinander in einem Winkelversatz ϕ z. B. im Bereich 150°≤ ϕ < 180°, insbesondere im Bereich 170° ≤ ϕ < 180°,wobei dieser Winkelversatz ϕ vorzugsweise von dem in der lotrecht zur Drehachse 03 stehenden Ebene ausgeführten Stellweg e des Rotationskörpers 02 abhängig ist. Denn je größer der Stellweg e des Rotationskörpers 02 ist, desto größer ist auch eine von der diametralen Anordnung der beiden Rollen 23 zu wählende Abweichung, d. h. bei größer werdendem Stellweg e des Rotationskörpers 02 wird der Winkelversatz ϕ der beiden Rollen 23 zunehmend kleiner als 180°.Je nach Bedarf können entlang der ersten Umfangslinie auch mehr als zwei Rollen 23 vorgesehen sein, wobei im Fall mehrerer Rollen 23 diese entlang der ersten Umfangslinie nicht gleichmäßig verteilt angeordnet sind, sondern in einem Winkelversatz, welcher von dem zuvor genannten verschieden ist, wenn der Betriebsfall zu berücksichtigen ist, dass der Rotationskörper 02 in der lotrecht zu seiner Drehachse 03 stehenden Ebene eine Stellbewegung zwischen seiner Normalbetriebsstellung und seiner Sonderbetriebsstellung ausführt.

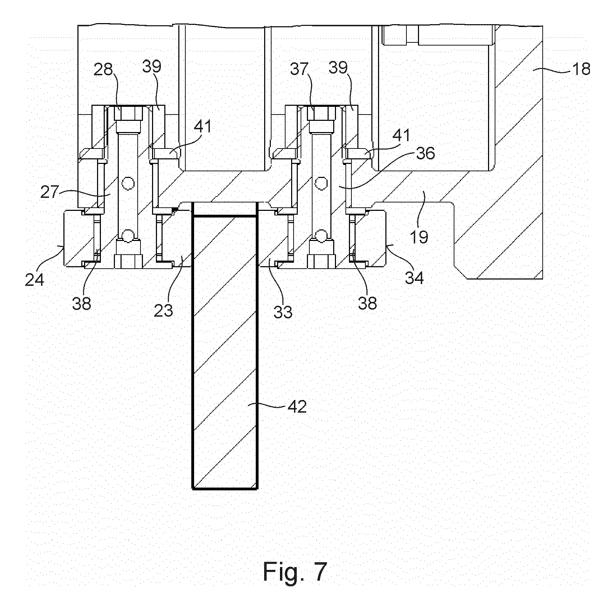

Die an der ersten Umfangslinie der äußeren Wandung 31 des Gehäuses 19 angeordneten Rollen 23 sind jeweils mit einem Bolzen 27 verbunden, wobei der Bolzen 27 jeweils die Wand des Gehäuses 19 des Halters 12 durchragt. In einer ersten Ausführungsvariante ist der Bolzen 27 jeweils drehfest mit der betreffenden Rolle 23 verbunden. In einer zweiten Ausführungsvariante ist die Rolle 23 jeweils drehbar auf dem betreffenden Bolzen 27 angeordnet (Fig. 7). An einer inneren Wandung 32 des Gehäuses 19 des Halters 12 anliegend ist an einem in das Innere des Gehäuses 19 des Halters 12 ragenden Ende des jeweiligen Bolzens 27 jeweils ein Antriebselement 28 vorgesehen, mit welchem der betreffende in der Wand des Gehäuses 19 des Halters 12 gelagerte Bolzen 27 drehbar ist. Das jeweilige Antriebselement 28 ist jeweils an dem betreffenden in das Innere des Gehäuses 19 des Halters 12 ragenden Bolzen 27 ausgebildet, und zwar an dem im Inneren des Gehäuses 19 des Halters 12 angeordneten Ende des jeweiligen Bolzens 27. An diesem Ende des jeweiligen Bolzens 27 ist das jeweilige Antriebselement 28 z. B. als ein Innensechskant ausgebildet, mittels welchem Innensechskant z. B. mit einem insbesondere von Hand betätigbaren Werkzeug der Bolzen 27 betätigbar und damit die jeweilige Rolle 23 in eine bestimmte Drehwinkelstellung drehbar ist. Ein für die Drehwinkeleinstellung aufzubringendes Drehmoment liegt z. B. im Bereich zwischen 2 Nm und 100 Nm. Es kann vorgesehen sein, dass für die Drehwinkeleinstellung ein bestimmtes Drehmoment vorgegeben wird. Jede der Rollen 23 ist jeweils exzentrisch auf ihrem jeweiligen Bolzen 27 angeordnet. Die Exzentrizität zwischen Bolzen 27 und Rolle 23 beträgt z. B. zwischen 0,1 mm und 10 mm. Die mit dem Antriebselement 28 eingestellte Drehwinkelstellung des Bolzens 27 und damit auch die Drehwinkelstellung der Rolle 23 wird durch mindestens ein den Bolzen 27 in seiner Drehbeweglichkeit feststellendes Sicherungselement 39 gesichert oder ist zumindest sicherbar, wobei das Sicherungselement 39 z. B. als eine gegen eine Scheibe 41 angestellte Mutter ausgebildet ist.

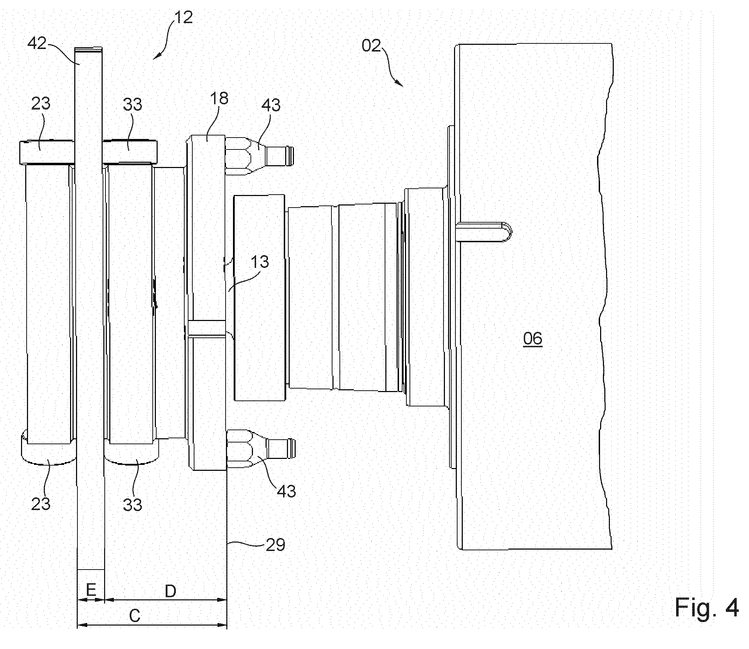

Fig. 4 zeigt die Vorrichtung zum axialen Feststellen des Rotationskörpers 02 nun in Verbindung mit einem zu einer der Gestellwände 01 der Rotationsdruckmaschine gehörenden Montageelement 42, z. B. einer Flanschscheibe 42. Die Flanschscheibe 42 wird zur Abdeckung der in der betreffenden Gestellwand 01 ausgebildeten Öffnung 11 verwendet. Die Flanschscheibe 42 ist einerseits mit der betreffenden Gestellwand 01 fest verbunden. Andererseits weist die Flanschscheibe 42 eine Öffnung auf, in welche Öffnung das Gehäuse 19 des Halters 12 vorzugsweise passgenau eingesteckt ist oder zumindest einsteckbar ist. Die Flanschscheibe 42 ist vorzugsweise an der Außenwand 26 der betreffenden Gestellwand 01 angeordnet oder dort zumindest anordenbar. Der zum größten Teil in der Öffnung 11 der betreffenden Gestellwand 01 angeordnete Halter 12 ist durch mindestens eine z. B. am Boden 18 des Halters 12 angreifende Drehmomentenstütze 43 gegen ein Verdrehen gesichert. Auch stützt sich der Halter 12 mit einem Widerlager, welches z. B. an der äußeren Wandung 31 des Gehäuses 19 dieses Halters 12 angeordnet ist, axial, d. h. in Richtung der Drehachse 03, d. h. parallel zur Drehachse 03 des Rotationskörpers 02 an der Flanschscheibe 42 ab.

Fig. 5 zeigt die Vorrichtung zum axialen Feststellen des Rotationskörpers 02 in Verbindung mit der Flanschscheibe 42 nochmals in einer perspektivischen Darstellung. Die entlang der ersten Umfangslinie der äußeren Wandung 31 des Gehäuses 19 angeordneten Rollen 23 liegen jeweils an der Flanschscheibe 42 an und stützen sich auf ihr ab. Damit stützt sich die jeweilige Mantelfläche 24 der jeweiligen Rolle 23 in demjenigen Betriebszustand, in welchem der Halter 12 an einer der Gestellwände 01 der Rotationsdruckmaschine montiert ist, über die mit der betreffenden Gestellwand 01 verbundene Flanschscheibe 42 auch an der vorzugsweise vertikal stehenden Außenwand 26 der betreffenden Gestellwand 01 ab. Das Widerlager, mit welchem sich der Halter 12 an der Flanschscheibe 42 axial abstützt, befindet sich auf der den Rollen 23 gegenüberliegenden Seite der Flanschscheibe 42. Aufgrund der exzentrischen Anordnung der Rollen 23 auf ihren jeweiligen Bolzen 27 wird bei einer Betätigung des Antriebselements 28 des jeweiligen Bolzens 27 je nach durch diese Betätigung eingestellter Drehwinkelstellung dieser Rollen 23 in Abhängigkeit ihrer jeweiligen Exzentrizität ein anderer sich parallel zur Drehachse 03 des axial festzustellenden Rotationskörpers 02 erstreckender Abstand C zwischen der jeweiligen Mantelfläche 24 dieser Rollen 23 und einer parallel zum Boden 18 des Halters 12 verlaufenden Linie 29, welche z. B. eine äußere Begrenzungslinie des Halters 12 ist, eingestellt oder ist zumindest einstellbar (Fig. 2 und 4). Die Flanschscheibe 42 wird durch die in ihrem jeweiligen Drehwinkel eingestellten Rollen 23 zwischen der jeweiligen Mantelfläche 24 dieser Rollen 23 und dem am Halter 12 angeordneten Widerlager eingeklemmt und damit festgestellt.

In einer besonders bevorzugten Ausführung der Vorrichtung zum axialen Feststellen des zwischen gegenüberstehenden Gestellwänden 01 angeordneten Rotationskörpers 02 sind entlang einer am Gehäuse 19 des Halters 12 verlaufenden zweiten Umfangslinie, welche von der ersten Umfangslinie in einem sich parallel zur Drehachse 03 des axial festzustellenden Rotationskörpers 02 erstreckenden Abstand Y verläuft und in einem Bereich zwischen dem Boden 18 des Halters 12 und der ersten Umfangslinie angeordnet ist, gleichfalls an der äußeren Wandung 31 dieses Gehäuses 19 vorzugsweise anliegend wiederum mehrere, insbesondere zwei Rollen 33 angeordnet, wobei auch eine Mantelfläche 34 dieser Rollen 33 jeweils parallel zu der betreffenden Außenwand 26 von einer der Gestellwände 01 angeordnet oder zumindest anordenbar ist. Diese zweite Anordnung von Rollen 33, die mindestens ebenso viele Rollen 33 aufweist wie die erste Anordnung von Rollen 23, ist baugleich zu der ersten Anordnung von Rollen 23 ausgebildet, d. h. diese zweiten Rollen 33 sind auch jeweils exzentrisch an einem Bolzen 36 angeordnet, wobei an einem sich im Inneren des Gehäuses 19 des Halters 12 befindenden Ende dieser Bolzen 36 jeweils wiederum ein Antriebselement 37 zur Ausführung einer Drehbewegung des betreffenden Bolzens 36 angeordnet ist. Auch bei dieser zweiten Anordnung von Rollen 33 ist es so, dass aufgrund der exzentrischen Anordnung dieser Rollen 33 auf ihren jeweiligen Bolzen 36 bei einer Betätigung des mit dem jeweiligen Bolzen 36 verbundenen Antriebselements 37 je nach durch diese Betätigung eingestellter Drehwinkelstellung dieser Rollen 33 in Abhängigkeit ihrer jeweiligen Exzentrizität ein anderer Abstand D zwischen der jeweiligen Mantelfläche 34 dieser Rollen 33 und der parallel zum Boden 18 des Halters 12 verlaufenden Linie 29, welche z. B. die äußere Begrenzungslinie des Halters 12 ist, eingestellt wird oder zumindest einstellbar ist. Da die zweite Anordnung von Rollen 33 vorzugsweise auf einer selben Höhe wie die Anordnung der ersten Rollen 23 angeordnet ist, stehen sich die jeweiligen Mantelflächen 24; 34 dieser Rollen 23; 33 in einem Abstand E paarweise gegenüber. Auch die zweite Anordnung von Rollen 33 kann einen Winkelversatz ϕ im Bereich 150° ≤ ϕ < 180°, insbesondereim Bereich 170° ≤ ϕ < 180° aufweisen. Beide Anordnungen von Rollen 23; 33 weisen insbesondere denselben Winkelversatz ϕ auf. Je nach eingestellter Drehwinkelstellung der Rollen 23 der ersten Anordnung und der Rollen 33 der zweiten Anordnung ist somit in Abhängigkeit der jeweiligen Exzentrizität zwischen den jeweiligen Mantelflächen 24; 34 dieser Rollen 23; 33 ein anderer Abstand E einstellbar (Fig. 2 und 5). Die zweite Anordnung von Rollen 33 bildet in dieser Ausführungsform der Erfindung das an dem Halter 12 angeordnete Widerlager. Zum axialen Feststellen des zwischen gegenüberstehenden Gestellwänden 01 angeordneten Rotationskörpers 02 werden z. B. die Rollen 33 der zweiten Anordnung ohne einen Kraftschluss auf einen bestimmten sich parallel zur Drehachse 03 des axial festzustellenden Rotationskörpers 02 erstreckenden Abstand D eingestellt, wobei dieser Abstand D zwischen der jeweiligen Mantelfläche 34 dieser Rollen 33 und der parallel zum Boden 18 des Halters 12 verlaufenden Linie 29 misst. Dann wird diese Vorrichtung zum axialen Feststellen des zwischen gegenüberstehenden Gestellwänden 01 angeordneten Rotationskörpers 02 gegen das Montageelement 42 der betreffenden Gestellwand 01 angestellt. Danach werden die Rollen 23 der ersten Anordnung durch eine Betätigung ihres jeweiligen Antriebselements 28 derart gegen das betreffende Montageelement 42 angestellt, so dass das betreffende Montageelement 42 zwischen den jeweiligen Mantelflächen 24; 34 dieser sich paarweise gegenüber stehenden Rollen 23; 33 spielfrei angeordnet ist (Fig. 4). Der von den jeweiligen Mantelflächen 24; 34 dieser sich paarweise gegenüber stehenden Rollen 23; 33 eingestellte Abstand E entspricht nunmehr der Dicke des zwischen den Mantelflächen 24; 34 dieser Rollen 23; 33 eingeklemmten Montageelementes 42. Die erste Anordnung von Rollen 23 liegt damit an derjenigen Seite des Montageelementes 42 an, die von der nächstliegenden Stirnseite 07 des Rotationskörpers 02 am weitesten entfernt ist. Die zweite Anordnung von Rollen 33 liegt hingegen an derjenigen Seite des Montageelementes 42 an, die der nächstliegenden Stirnseite 07 des Rotationskörpers 02 am nächstliegenden ist. Aufgrund der jeweiligen Exzentrizität der an dieser Einstellung beteiligten Rollen 23; 33 und damit der Möglichkeit zur variablen Einstellung der Abstände C; D, E ist der axial beweglich gelagerte Rotationskörper 02 mittels der Vorrichtung zum axialen Feststellen dieses Rotationskörpers 02 auch in seiner axialen Position eingestellt oder zumindest einstellbar. Insofern ergibt sich ein Verfahren zum axialen Feststellen eines zwischen gegenüberstehenden Gestellwänden 01 angeordneten Rotationskörpers 02, bei dem ein Ende des Rotationskörpers 02 an einer der Gestellwände 01 von dem Halter 12 gehalten wird, wobei insbesondere an dem Halter 12 entlang einer ersten Umfangslinie angeordnete erste Rollen 23 und entlang einer zweiten, von der ersten Umfangslinie beabstandeten Umfangslinie angeordnete zweite Rollen 33 unabhängig voneinander an ein mit der den Halter 12 aufweisenden Gestellwand 01 verbundenes Montageelement 42 angestellt werden.

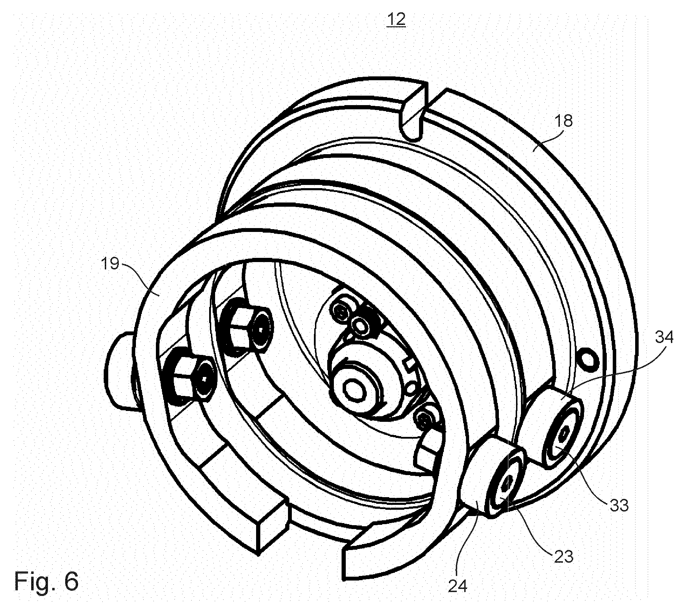

Fig. 6 zeigt eine perspektivische Darstellung der Vorrichtung zum axialen Feststellen des zwischen gegenüberstehenden Gestellwänden 01 angeordneten Rotationskörpers 02.

Fig. 7 zeigt in einem Teilausschnitt die Vorrichtung zum axialen Feststellen des Rotationskörpers, insbesondere deren Halter 12. Hier ist die zweite Ausführungsform der Rollen 23; 33 verwirklicht, denn die Rollen 23; 33 sind auf ihrem jeweiligen Bolzen 27; 36 jeweils drehbar gelagert. Die Lagerung erfolgt durch ein Radiallager 38, z. B. ein Nadellager, dessen Wälzkörper in der Fig. 7 erkennbar sind. Die Rollen 23; 33 sind dadurch in der Lage, jeweils um eine lotrecht zur zylindrischen Wandung des Gehäuses 19 des Halters 12 stehende Drehachse zu rotieren. Das Radiallager 38 der jeweiligen Rolle 23; 33 braucht nicht vorgespannt und auch nicht spielfrei ausgebildet zu sein. Die drehbar gelagerten Rollen 23; 33 werden aufgrund ihrer Drehbeweglichkeit auch als Laufrollen bezeichnet. Die jeweilige Mantelfläche 24; 34 der jeweiligen Rolle 23; 33 liegt z. B. plan an der Flanschscheibe 42 an und stützt sich bei einer entsprechenden Drehwinkeleinstellung der jeweiligen Bolzen 27; 36 an dieser Flanschscheibe 42 ab, wobei der Rotationskörper 02 an dieser Flanschscheibe 42 durch die einstellbare Klemmung zwischen den jeweiligen Mantelflächen 24; 34 der jeweiligen paarweise zusammenwirkenden Rollen 23; 33 axial festgestellt wird. Drehbeweglich gelagerte Rollen 23; 33 sind insbesondere in Verbindung mit der Ausgestaltung des in einer lotrecht zu seiner Drehachse 03 stehenden Ebene um einen Stellweg e bewegbar angeordneten Rotationskörpers 02 von Vorteil.

### Bezugszeichenliste

- 01: Gestellwand
- 02: Rotationskörper
- 03: Drehachse
- 04: Drehlager; Radiallager
- 05: -
- 06: Ballen
- 07: Stirnseite
- 08: Zapfen
- 09: -
- 10: -
- 11: Öffnung
- 12: Halter
- 13: Welle
- 14: Flansch
- 15: -
- 16: Axiallager
- 17: Öffnung
- 18: Boden
- 19: Gehäuse
- 20: -
- 21: Spannelement
- 22: Schraubgewinde
- 23: Rolle
- 24: Mantelfläche
- 25: -
- 26: Außenwand
- 27: Bolzen
- 28: Antriebselement
- 29: Linie
- 30: -
- 31: Wandung
- 32: Wandung
- 33: Rolle
- 34: Mantelfläche
- 35: -
- 36: Bolzen
- 37: Antriebselement
- 38: Radiallager
- 39: Sicherungselement
- 40: -
- 41: Scheibe
- 42: Montageelement; Flanschscheibe
- 43: Drehmomentenstütze

- A: Abstand
- B: Abstand
- C: Abstand
- D: Abstand
- E: Abstand
- M: Mitte
- S: Stellweg
- X: Position
- Y: Abstand
- Z: Zentrum
- d06: Durchmesser
- d08: Durchmesser
- d11: Durchmesser
- d14: Durchmesser
- d19: Durchmesser
- e: Stellweg
- I: Länge

- ϕ: Winkelversatz

## Patentansprüche

1. Vorrichtung zum axialen Feststellen eines zwischen gegenüberstehenden Gestellwänden (01) angeordneten Rotationskörpers (02), aufweisend einen an einer der Gestellwände (01) mit Bezug auf die betreffende Gestellwand (01) drehfest angeordneten Halter (12), in welchem Halter (12) ein Ende des axial festzustellenden Rotationskörpers (02) drehbeweglich gehalten ist, **dadurch gekennzeichnet, dass** entlang einer ersten Umfangslinie des Halters (12) mehrere Rollen (23) angeordnet sind, wobei die an der ersten Umfangslinie des Halters (12) angeordneten Rollen (23) jeweils mit einem Bolzen (27) verbunden sind, wobei diese Rollen (23) jeweils dadurch exzentrisch gelagert sind, dass jede der Rollen (23) jeweils exzentrisch auf ihrem jeweiligen Bolzen (27) angeordnet ist, wobei an einem Ende des jeweiligen Bolzens (27) jeweils ein Antriebselement (28) vorgesehen ist, mit welchem der betreffende Bolzen (27) drehbar ist, wobei eine jeweilige Mantelfläche (24) dieser Rollen (23) jeweils dadurch gegen ein mit der Gestellwand (01) verbundenes Montageelement (42) anstellbar ist, dass mittels des Antriebselements (28) die jeweilige Rolle (23) in eine bestimmte Drehwinkelstellung drehbar ist, wobei der Halter (12) mit einem Widerlager sich am Montageelement (42) parallel zur Drehachse (03) des Rotationskörpers (02) abstützend angeordnet ist, wobei der Rotationskörper (02) durch eine Klemmung des Montageelementes (42) zwischen dem Widerlager des Halters (12) und der jeweiligen Mantelfläche (24) der an das Montageelement (42) angestellten Rollen (23) axial feststellbar ist.

2. Vorrichtung nach Anspruch 1, **dadurch gekennzeichnet, dass** in dem Halter (12) eine Welle (13) drehbar gelagert ist, wobei diese Welle (13) mit dem vom Halter (12) gehaltenen Ende des axial festzustellenden Rotationskörpers (02) verbunden oder zumindest verbindbar ist, wobei der Halter (12) ein Axiallager aufweist, in welchem die mit dem Rotationskörper (02) verbindbare Welle (13) gelagert ist.

3. Vorrichtung nach Anspruch 1 oder 2, **dadurch gekennzeichnet, dass** das Widerlager des Halters (12) derart ausgebildet ist, dass entlang einer zweiten Umfangslinie des Halters (12) mehrere Rollen (33) angeordnet sind, wobei die Rollen (23) der ersten Anordnung von Rollen (23) und die Rollen (33) der zweiten Anordnung von Rollen (33) sich paarweise gegenüber stehend angeordnet sind.

4. Vorrichtung nach Anspruch 3, **dadurch gekennzeichnet, dass** die erste Umfangslinie des Halters (12), entlang welcher mehrere Rollen (23) angeordnet sind, und die zweite Umfangslinie des Halters (12), entlang welcher ebenfalls mehrere Rollen (33) angeordnet sind, in einem sich parallel zur Drehachse (03) des Rotationskörpers (02) erstreckenden Abstand (Y) voneinander beabstandet angeordnet sind, wobei das mit der Gestellwand (01) verbundene Montageelement (42) zwischen den jeweiligen sich paarweise gegenüber stehenden Rollen (23; 33) spielfrei anordenbar ist.

5. Vorrichtung nach Anspruch 1 oder 2 oder 3, **dadurch gekennzeichnet, dass** die Rollen (23; 33) entlang ihrer jeweiligen Umfangslinie jeweils in einem von 180° verschiedenen Winkelversatz (ϕ) angeordnet sind.

6. Vorrichtung nach Anspruch 1 oder 2 oder 3, **dadurch gekennzeichnet, dass** der Halter (12) durch eine Drehmomentenstütze (43) in der betreffenden Gestellwand (01) gegen ein Verdrehen gesichert ist.

7. Vorrichtung nach Anspruch 1 oder 2 oder 3, **dadurch gekennzeichnet, dass** der jeweilige Bolzen (27; 36) jeweils eine Wand eines Gehäuses (19) des Halters (12) durchragt, wobei das jeweilige Antriebselement (28; 37) einer jeden Rolle (23; 33) jeweils an dem betreffenden Bolzen (27; 36) ausgebildet ist.

8. Vorrichtung nach Anspruch 7, **dadurch gekennzeichnet, dass** das jeweilige Antriebselement (28; 37) einer jeden Rolle (23; 33) jeweils an dem im Inneren des Gehäuses (19) des Halters (12) angeordneten Ende des jeweiligen Bolzens (27; 36) ausgebildet ist.

9. Vorrichtung nach Anspruch 3, **dadurch gekennzeichnet, dass** die jeweilige entlang der zweiten Umfangslinie des Halters (12) angeordnete Rolle (33) mit ihrem Antriebselement (37) jeweils in eine bestimmte Drehwinkelstellung drehbar ist.

10. Vorrichtung nach Anspruch 1 oder 9, **dadurch gekennzeichnet, dass** die jeweilige mit ihrem Antriebselement (28; 37) jeweils in eine bestimmte Drehwinkelstellung gebrachte Rolle (23; 33) durch mindestens ein den jeweiligen Bolzen (27; 36) der betreffenden Rolle (23; 33) in seiner Drehbeweglichkeit feststellendes Sicherungselement (39) gesichert oder zumindest sicherbar ist.

11. Vorrichtung nach Anspruch 1 oder 2 oder 3, **dadurch gekennzeichnet, dass** der Rotationskörper (02) in einer lotrecht zu seiner Drehachse (03) stehenden Ebene um einen Stellweg (e) bewegbar angeordnet ist.

12. Verfahren zum axialen Feststellen eines zwischen gegenüberstehenden Gestellwänden (01) angeordneten Rotationskörpers (02), bei dem ein Ende des Rotationskörpers (02) an einer der Gestellwände (01) von einem Halter (12) gehalten wird, wobei an dem Halter (12) entlang einer ersten Umfangslinie angeordnete jeweils mit einem Bolzen (27) verbundene erste Rollen (23) dadurch an ein mit der den Halter (12) aufweisenden Gestellwand (01) verbundenes Montageelement (42) angestellt werden, dass jede der Rollen (23) jeweils exzentrisch auf ihrem jeweiligen Bolzen (27) angeordnet ist, wobei an einem Ende des jeweiligen Bolzens (27) jeweils ein Antriebselement (28) vorgesehen ist, mit welchem der betreffende Bolzen (27) drehbar ist, wobei eine jeweilige Mantelfläche (24) dieser Rollen (23) jeweils dadurch gegen ein mit der Gestellwand (01) verbundenes Montageelement (42) anstellbar ist, dass aufgrund der exzentrischen Anordnung der Rollen (23) auf ihren jeweiligen Bolzen (27) bei einer Betätigung des Antriebselements (28) des jeweiligen Bolzens (27) je nach durch diese Betätigung eingestellter Drehwinkelstellung dieser Rollen (23) in Abhängigkeit ihrer jeweiligen Exzentrizität ein anderer sich parallel zu einer Drehachse (03) des axial festzustellenden Rotationskörpers (02) erstreckender Abstand (C) zwischen der jeweiligen Mantelfläche (24) dieser Rollen (23) und einer parallel zu einem Boden (18) des Halters (12) verlaufenden Linie (29) eingestellt wird, wobei dieses mit der Gestellwand (01) verbundene Montageelement (42) zwischen den jeweiligen Mantelflächen (24) der ersten Rollen (23) und einem den Halter (12) am Montageelement (42) parallel zur Drehachse (03) des Rotationskörpers (02) abstützenden Widerlager eingeklemmt wird, wobei der Rotationskörper (02) durch diese Klemmung des Montageelementes (42) axial festgestellt wird.

13. Verfahren nach Anspruch 12, **dadurch gekennzeichnet, dass** ein Widerlager verwendet wird, bei dem entlang einer zweiten Umfangslinie des Halters (12) mehrere zweite Rollen (33) angeordnet sind.

14. Verfahren nach Anspruch 13, **dadurch gekennzeichnet, dass** die entlang der ersten Umfangslinie angeordneten ersten Rollen (23) und die entlang der zweiten, von der ersten Umfangslinie beabstandeten Umfangslinie angeordneten zweiten Rollen (33) unabhängig voneinander an das mit der Gestellwand (01) verbundene Montageelement (42) angestellt werden.

15. Verfahren nach Anspruch 12 oder 13 oder 14, **dadurch gekennzeichnet, dass** der Rotationskörper (02) längs seiner Drehachse (03) zwischen den ihn haltenden Gestellwänden (01) beweglich angeordnet wird, wobei eine mit diesem Rotationskörper (02) fest verbundene Position (X) entlang der Drehachse (03) entweder relativ zu einem anderen Rotationskörper oder relativ zu einem gestellfesten Bezugspunkt eingestellt wird.

## Claims

1. A device for axial fixing of a rotation body (02) arranged between opposite frame walls (01), having a retainer (12) arranged on one of the frame walls (01), rotationally fixed relative to the relevant frame wall (01), wherein an end of the rotation body (02) to be fixed axially is held rotatable in said retainer (12), **characterized in that** several rollers (23) are arranged along a first circumferential line of the retainer (12), whereby the rollers (23) arranged on the first circumferential line of the retainer (12) are connected in each case to a pin (27), whereby these rollers (23) in each case are mounted eccentrically **in that** each of the rollers (23) is arranged in each case eccentrically on its respective pin (27), whereby a drive element (28) is provided at one end of the respective pin (27) in each case, with which the relevant pin (27) can be rotated, whereby a respective shell surface (24) of said rollers (23) in each case can be arranged against a mounting element (42) connected to the frame wall (01), **in that** by means of the drive element (28) the respective roller (23) can be rotated in a specific rotation angle position, whereby the retainer (12) with a thrust bearing is arranged supported on the mounting element (42) parallel to the axis of rotation (03) of the rotation body (02), whereby the rotation body (02) can be fixed axially by clamping of the mounting element (42) between the thrust bearing of the retainer (12) and the respective shell surface (24) of the rollers (23) set on the mounting element (42).

2. The device according to Claim 1, **characterized in that** a shaft (13) is mounted to rotate in the retainer (12), whereby said shaft (13) is connected or at least can be connected to the end, held by the retainer (12), of the rotation body (02) to be fixed axially, whereby the retainer (12) has an axial bearing in which the shaft (13) connectable with the rotation body (02) is mounted.

3. The device according to Claim 1 or 2, **characterized in that** the thrust bearing of the retainer (12) is configured such that several rollers (33) are arranged along a second circumferential line of the retainer (12), whereby the rollers (23) of the first arrangement of rollers (23) and the rollers (33) of the second arrangement of rollers (33) are arranged opposite each other in pairs.

4. The device according to Claim 3, **characterized in that** the first circumferential line of the retainer (12), along which several rollers (23) are arranged, and the second circumferential line of the retainer (12), along which several rollers (33) are likewise arranged, are arranged at a distance from each other at a distance (Y) extending parallel to the axis of rotation (03) of the rotation body (02), whereby the mounting element (42) connected to the frame wall (01) can be arranged clearance-free between the respective opposite rollers (23; 33) in pairs.

5. The device according to Claim 1 or 2 or 3, **characterized in that** the rollers (23; 33) are arranged along their respective circumferential line in each case in an angular offset (ϕ) different by 180°.

6. The device according to Claim 1 or 2 or 3, **characterized in that** the retainer (12) is secured twisting against by a torque arm (43) in the relevant frame wall (01).

7. The device according to Claim 1 or 2 or 3, **characterized in that** the respective pin (27; 36) in each case protrudes through a wall of a housing (19) of the retainer (12), whereby the respective drive element (28; 37) of each roller (23; 33) is configured in each case on the relevant pin (27; 36).

8. The device according to Claim 7, **characterized in that** the respective drive element (28; 37) of each roller (23; 33) is configured in each case on the end of the respective pin (27; 36) arranged inside the housing (19) of the retainer (12).

9. The device according to Claim 3, **characterized in that** the respective roller (33) arranged along the second circumferential line of the retainer (12) can be rotated with its drive element (37) in each case in a specific rotation angle position.

10. The device according to Claim 1 or 9, **characterized in that** the respective roller (23; 33) brought to a specific rotation angle position with its drive element (28; 37) is secured or at least can be secured in each case by at least one securing element (39) fixing the respective pin (27; 36) of the relevant roller (23; 33) in its rotation capability.

11. The device according to Claim 1 or 2 or 3, **characterized in that** the rotation body (02) is arranged movably about a travel range (e) in a plane arranged perpendicularly to its axis of rotation (03).

12. A method for axial fixing of a rotation body (02) arranged between opposite frame walls (01), in which an end of the rotation body (02) is retained on one of the frame walls (01) by a retainer (12), whereby first rollers (23) arranged on the retainer (12) along a first circumferential line connected in each case to a pin (27) are set on a mounting element (42) connected to the frame wall (01) having the retainer (12), in that each of the rollers (23) is arranged in each case eccentrically on its respective pin (27), whereby a drive element (28) is provided at an end of the respective pin (27) in each case, with which the relevant pin (27) can be rotated, whereby a respective shell surface (24) of these rollers (23) in each case can be arranged against a mounting element (42) connected to the frame wall (01), whereby due to the eccentric arrangement of rollers (23) on their respective pin (27) on actuation of the drive element (28) of the respective pin (27) depending on rotation angle position of these rollers (23) set by this actuation depending on their respective eccentricity, another distance (C) extending parallel to a axis of rotation (03) of the rotation body (02) to be fixed axially between the respective shell surface (24) of these rollers (23) and a line (29) running parallel to a floor (18) of the retainer (12) is set, whereby said mounting element (42) connected to the frame wall (01) between the respective shell surfaces (24) of the first rollers (23) and a thrust bearing supporting the retainer (12) on the mounting element (42) is clamped parallel to the axis of rotation (03) of the rotation body (02), whereby the rotation body (02) is fixed axially by this clamping of the mounting element (42).

13. The method according to Claim 12, **characterized in that** a thrust bearing is used in which several second rollers (33) are arranged along a second circumferential line of the retainer (12).

14. The method according to Claim 13, **characterized in that** the first rollers (23) arranged along the first circumferential line and the second rollers (33) arranged along the second circumferential line are set at a distance from the first circumferential line independently of each other on the mounting element (42) connected to the frame wall (01).

15. The method according to Claim 12 or 13 or 14, **characterized in that** the rotation body (02) is arranged movably along its axis of rotation (03) between the frame walls (01) holding the latter, whereby a position (X) connected solidly to said rotation body (02) along the axis of rotation (03) is set either relative to another rotation body or relative to a frame-related reference point.

## Revendications

1. Dispositif pour l'immobilisation axiale d'un corps rotatif (02) disposé entre des parois de bâti (01) opposées, comportant un support (12) disposé sur une des parois de bâti (01), solidairement en rotation par rapport à la paroi de bâti (01) correspondante, une extrémité du corps rotatif (02) à immobiliser axialement étant maintenue mobile en rotation dans ledit support (12), **caractérisé en ce que** plusieurs rouleaux (23) sont disposés le long d'une première ligne périphérique du support (12), les rouleaux (23) disposés sur la première ligne périphérique du support (12) étant respectivement raccordés à une broche (27), lesdits rouleaux (23) étant montés excentriquement **en ce que** chacun des rouleaux (23) est disposé sur sa broche (27) respective, un élément d'entraînement (28) étant prévu à une extrémité de chaque broche (27), au moyen duquel la broche (27) correspondante est entraînable en rotation, une surface périphérique (24) desdits rouleaux (23) étant applicable contre un élément de montage (42) raccordé à la paroi de bâti (01) **en ce que** chaque rouleau (23) est entraînable en rotation vers une position angulaire définie au moyen de l'élément d'entraînement (28), le support (12) étant disposé de manière à s'appuyer par une butée contre l'élément de montage (42) parallèlement à l'axe de rotation (03) du corps rotatif (02), le corps rotatif (02) pouvant être immobilisé axialement par un serrage de l'élément de montage (42) entre la butée du support (12) et la surface périphérique (24) de chacun des rouleaux (23) appliqués contre l'élément de montage (42).

2. Dispositif selon la revendication 1, **caractérisé en ce qu'**un arbre (13) est monté de manière rotative dans le support (12), ledit arbre (13) étant raccordé ou pouvant au moins être raccordé à l'extrémité, maintenue par le support (12), du corps rotatif (02) à immobiliser axialement, le support (12) présentant un palier axial où est monté l'arbre (13) pouvant être raccordé au corps rotatif (02).

3. Dispositif selon la revendication 1 ou 2, **caractérisé en ce que** la butée du support (12) est réalisée de telle manière que plusieurs rouleaux (33) sont disposés le long d'une deuxième ligne périphérique du support (12), lesdits rouleaux (23) du premier agencement de rouleaux (23) et les rouleaux (33) du deuxième agencement de rouleaux (33) étant disposés verticalement opposés deux par deux.

4. Dispositif selon la revendication 3, **caractérisé en ce que** la première ligne périphérique du support (12), le long de laquelle sont disposés plusieurs rouleaux (23), et la deuxième ligne périphérique du support (12), le long de laquelle sont également disposés plusieurs rouleaux (33), sont espacées l'une de l'autre d'une distance (Y) s'étendant parallèlement à l'axe de rotation (03) du corps rotatif (02), l'élément de montage (42) raccordé à la paroi de bâti (01) pouvant être disposé sans jeu entre les rouleaux (23 ; 33) opposés respectivement deux par deux.

5. Dispositif selon la revendication 1 ou 2 ou 3, **caractérisé en ce que** les rouleaux (23 ; 33) sont disposés chacun suivant un décalage angulaire (ϕ) de 180° le long de leur ligne périphérique respective.

6. Dispositif selon la revendication 1 ou 2 ou 3, **caractérisé en ce qu'**une rotation du support (12) est empêchée par un bras de couple (43) dans la paroi de bâti (01) correspondante.

7. Dispositif selon la revendication 1 ou 2 ou 3, **caractérisé en ce que** chaque broche (27 ; 36) traverse une paroi d'un boîtier (19) du support (12), l'élément d'entraînement (28 ; 37) de chaque rouleau (23 ; 33) étant formé sur la broche (27 ; 36) correspondante.

8. Dispositif selon la revendication 7, **caractérisé en ce que** l'élément d'entraînement (28 ; 37) de chaque rouleau (23 ; 33) est formé à l'extrémité de la broche (27 ; 36) respective disposée à l'intérieur du boîtier (19) du support (12).

9. Dispositif selon la revendication 3, **caractérisé en ce que** chaque rouleau (33) disposé le long de la deuxième ligne périphérique du support (12) est entraînable en rotation vers une position angulaire définie par son élément d'entraînement (37).

10. Dispositif selon la revendication 1 ou 9, **caractérisé en ce que** chaque rouleau (23 ; 33) amené dans une position angulaire définie par son élément d'entraînement (28 ; 37) peut être immobilisé ou est au moins immobilisable par au moins un élément de fixation (39) bloquant la rotation de la broche (27 ; 36) du rouleau (23 ; 33) correspondante.

11. Dispositif selon la revendication 1 ou 2 ou 3, **caractérisé en ce que** le corps rotatif (02) est disposé de manière mobile autour d'une course de réglage (e) sur un plan perpendiculaire à son axe de rotation (03).

12. Procédé d'immobilisation axiale d'un corps rotatif (02) disposé entre des parois de bâti (01) opposées, où une extrémité du corps rotatif (02) est maintenue par un support (12) contre une des parois de bâti (01), des premiers rouleaux (23) disposés sur le support (12) le long d'une première ligne périphérique et respectivement raccordés à une broche (27) étant appliqués contre un élément de montage (42) raccordé à la paroi de bâti (01) présentant le support (12) en ce que chacun des rouleaux (23) est disposé excentriquement sur sa broche (27) respective, un élément d'entraînement (28) étant prévu à une extrémité de chaque broche (27), au moyen duquel la broche (27) correspondante est entraînable en rotation, chaque surface périphérique (24) desdits rouleaux (23) étant applicable contre un élément de montage (42) raccordé à la paroi de bâti (01) en ce que l'agencement excentrique des rouleaux (23) sur leur broche (27) respective entraîne en cas d'actionnement de l'élément d'entraînement (28) de la broche (27) et suivant la position angulaire desdits rouleaux (23) réglée en fonction de leur excentricité, une modification de la distance (C) s'étendant parallèlement à un axe de rotation (03) du corps rotatif (02) à immobiliser axialement, entre la surface périphérique (24) desdits rouleaux (23) et une ligne (29) parallèle à un fond (18) du support (12), ledit élément de montage (42) raccordé à la paroi de bâti (01) étant serré entre chaque surface périphérique (24) des premiers rouleaux (23) et une butée d'appui du support (12) sur l'élément de montage (42) parallèlement à l'axe de rotation (03) du corps rotatif (02), le corps rotatif (02) étant immobilisé axialement par ce serrage de l'élément de montage (42).

13. Procédé selon la revendication 12, **caractérisé en ce qu'**une butée est utilisée, où plusieurs deuxièmes rouleaux (33) sont disposés le long d'une deuxième ligne périphérique du support (12).

14. Procédé selon la revendication 13, **caractérisé en ce que** les premiers rouleaux (23) disposés le long de la première ligne périphérique et les deuxièmes rouleaux (33) disposés le long de la deuxième ligne périphérique espacée de la première ligne périphérique sont appliqués indépendamment les uns des autres contre l'élément de montage (42) raccordé à la paroi de bâti (01).

15. Procédé selon la revendication 12 ou 13 ou 14, **caractérisé en ce que** le corps rotatif (02) est disposé de manière mobile le long de son axe de rotation (03) entre les parois de bâti (01) qui le maintiennent, une position (X) fixement raccordée audit corps rotatif (02) le long de l'axe de rotation (03) étant réglée soit par rapport à un autre corps rotatif, soit par rapport à un point de référence fixe du bâti.
